**Europäisches Patentamt**

**European Patent Office**

**Office européen des brevets**

(19)

(11) **EP 0 982 269 A1**

(12) # DEMANDE DE BREVET EUROPEEN

(43) Date de publication:
**01.03.2000 Bulletin 2000/09**

(51) Int Cl.7: **C01B 39/22**

(21) Numéro de dépôt: **99402050.1**

(22) Date de dépôt: **12.08.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **21.08.1998 FR 9810621**

(71) Demandeur: **L'AIR LIQUIDE, SOCIETE ANONYME POUR**
**L'ETUDE ET L'EXPLOITATION DES PROCEDES GEORGES CLAUDE**
**75007 Paris (FR)**

(72) Inventeurs:
• **Labasque, Jacques**
  **78000 Versailles (FR)**
• **Moreau, Serge**
  **78140 Velizy-Villacoublay (FR)**
• **Lledos, Bernard**
  **78280 Guyancourt (FR)**

(74) Mandataire: **Le Moenner, Gabriel et al**
**L'Air Liquide S.A.,**
**DSPI,**
**Service Brevets et Marques,**
**75 Quai d'Orsay**
**75321 Paris Cedex 07 (FR)**

(54) **Procédé de fabrication de particules de zéolite X échangée par des cations métalliques**

(57) L'invention concerne un procédé de fabrication de particules de zéolite de type X échangée par au moins des cations lithium et ayant un rapport Si/Al inférieur ou égal à 1.5, dans lequel (a) on fait percoler une solution-mère contenant des sels de lithium ayant une pureté molaire supérieure à 95%, à travers un lit de particules zéolitiques, ladite solution-mère permettant d'atteindre un taux d'échange limite (TEL) desdites particules de zéolite compris entre 90 et 100%, (b) on arrête la percolation de la solution mère lorsqu'on a utilisé une quantité de solution-mère permettant d'obtenir un taux échange réel moyen (TER) tel que : TER = TEL - 2% ± 1% ; et (c) on récupère les particules de zéolite échangées au lithium. Les particules de zéolite faujasite, de préférence X, échangée à au moins 88 % par des cations lithium et ayant un rapport Si/Al inférieur ou égal à 1.5, obtenues par un tel procédé de fabrication, peuvent être utilisées en tant qu'adsorbant dans un procédé PSA de séparation ou purification d'un flux gazeux, de préférence VSA.

EP 0 982 269 A1

## EP 0 982 269 A1

**Description**

L'invention concerne un procédé de fabrication de zéolites X échangées avec des cations lithium et destinées à être mises en oeuvre ensuite dans un procédé de type PSA, et plus particulièrement de type VSA, de séparation d'un flux gazeux, en particulier d'un flux gazeux contenant essentiellement de l'oxygène et de l'azote, tel l'air.

Les gaz de l'air, tels notamment l'oxygène et l'azote, présentent un grand intérêt industriel. Actuellement, une des techniques non-cryogéniques utilisées pour produire ces gaz est la technique dite "PSA" (pour Pressure Swing Adsorption), laquelle recouvre non seulement les procédés PSA proprement-dits, mais aussi les procédés analogues, tels les procédés VSA (Vacuum Swing Adsorption) ou MPSA (Mixed Pressure Swing Adsorption).

Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage progressif de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale du procédé.

Actuellement, les zéolites échangées par des cations métalliques sont les adsorbants les plus utilisés dans les procédés PSA.

De telles particules zéolitiques contiennent des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques.

La proportion de cations métalliques introduits dans la structure zéolitique par rapport à la capacité totale d'échange est appelée le taux d'échange, lequel est compris entre 0 et 100 %.

Actuellement, les adsorbants les plus utilisés dans les procédés de type PSA de séparation de gaz, en particulier de l'air, sont des zéolites, notamment de type X ou LSX, fortement échangées, en général à plus de 80%, voire à plus de 95%, avec cations de métaux très coûteux, tels notamment des cations lithium. De telles zéolites sont notamment décrites dans les documents EP-A-486384, EP-A-606848, EP-A-589391, EP-A-589406, EP-A-548755, US-A-268023, EP-A-109063 et EP-A-760248.

Dans le cas particulier du lithium, le taux de lithium est la proportion de cations lithium associés à l'aluminium en position tétraédrique contenu dans la phase zéolitique de la particule et associé à des cations échangeables; ce taux peut être exprimé par le rapport Li/Al.

Ainsi, les documents US-A-4,859,217 et US-A-5,268,023 décrivent des zéolites X ou LSX (pour Low Silica X ou zéolite pauvre en silice) dont la capacité d'adsorption d'azote croît linéairement en fonction du taux d'échange au lithium pour les rapports Li/Al supérieurs à 80%. En d'autres termes, selon ces documents, le taux d'échange en lithium le meilleur est le taux le plus élevé pouvant être obtenu, à savoir de 99% à 100% d'après les exemples donnés dans US-A-4,859,217.

En outre, les documents US-A-5,174,979 et US-A-5,413,625 décrivent une zéolite X ou LSX ayant un rapport Li/métal alcalino-terreux compris entre 95:5 et 50:50. Pour atteindre le taux d'échange maximal au lithium, les zéolites décrites dans ces documents sont préparées avec une forte consommation de sels de lithium, c'est-à-dire une consommation comprise entre 6 et 12 fois la quantité stoechiométrique nécessaire à l'échange complet des cations échangeables associés à l'aluminium de la phase zéolitique.

Cependant, contrairement à ce que suggère l'art antérieur, il existe dans la phase zéolitique des particules d'adsorbant un certain de nombre de cations autres que le sodium et le lithium, lesquels sont issus notamment des réactifs de synthèse et/ou du liant servant à fabriquer lesdites particules.

Or, les inventeurs de la présente invention ont mis en évidence que ces autres cations sont, en général, plus difficile à échanger que les cations sodium.

En d'autres termes, la substitution de ces cations par des cations lithium est relativement difficile et engendre donc une surconsommation de solution-mère de sels de lithium, d'où il résulte une augmentation importante des coûts de fabrication des particules d'adsorbant.

Il s'ensuit alors que le taux d'échange réel (TER) qui est obtenu après échange d'ions n'est pas 99% ou 100% comme le suggère l'art antérieur, compte tenu de la présence de ces cations autres que lithium et sodium dans la phase zéolitique.

De là, il est nettement préférable, notamment du point de vue des coûts de fabrication, de fabriquer des particules de zéolite ayant un taux d'échange réel (TER) inférieur au taux d'échange maximal décrit par l'art antérieur.

Or, chaque solution-mère de sels de lithium permet d'obtenir un taux d'échange limite (TEL) ou maximal des particules de zéolites soumises à un procédé d'échange d'ions utilisant cette solution-mère.

Le but de la présente invention est alors de proposer un procédé de fabrication d'adsorbant échangé par des cations métalliques permettant d'obtenir un optimum, non seulement, d'efficacité dudit adsorbant lorsque celui-ci est utilisé dans un procédé PSA, mais aussi de rendement d'échange d'ions durant la fabrication de cet adsorbant.

La présente invention concerne alors un procédé de fabrication de particules de zéolite X ayant un rapport Si/Al inférieur ou égal à 1.5 et échangée par au moins des cations lithium, dans lequel :

a) on fait percoler au moins une solution-mère contenant des sels de lithium ayant une pureté molaire supérieure à 98%, à travers au moins un lit de particules zéolitiques, ladite solution-mère permettant d'atteindre un taux d'échange limite (TEL) desdites particules de zéolite compris entre 90 et 100%,

b) on arrête la percolation de ladite solution mère lorsqu'on a utilisé une quantité de solution-mère nécessaire pour obtenir un taux échange réel moyen (TER) tel que : TER = TEL - 2% $\pm$ 1%

c) on récupère les particules de zéolite échangées au lithium obtenues à l'étape b).

Dans le cadre de la présente invention, on appelle TEL, le taux échange limite de la zéolite obtenu en moyenne par passage d'environ au moins 6 fois la stoechiométrie, de préférence d'au moins 10 à 100 fois la stoechiométrie, d'une solution de sel de lithium au travers d'un lit de particules de ladite zéolite contenu dans une colonne d'échange d'ions et à la température de l'échange industriel, c'est-à-dire aux environs de 100°C. De préférence, le taux échange limite (TEL) est exprimé en fonction du rapport Li/Al (en %) dans la phase zéolitique et en fonction du rapport Li/(Li+Na) dans la bille formée par agglomération d'au moins une phase zéolitique et d'au moins un liant. En général, le TEL n'est pas égal à 100% de par la présence d'impuretés dans la solution-mère de sel de lithium et dans la zéolite elle-même.

Selon le cas, le procédé de fabrication de l'invention peut inclure l'une ou plusieurs des caractéristiques suivantes :

- la solution-mère à une pureté de 98 % à 99.9%, de préférence de 99.3% à 99.8%.
- le TEL est compris entre 93% et 99%.
- le TER est compris entre 90% et 98%.
- l'échange d'ions est réalisé à une température entre 70° et 140°C, de préférence de l'ordre de 100°C.
- ladite zéolite est une faujasite, de préférence une zéolite X ayant un rapport Si/Al de l'ordre de 1.

L'invention concerne, en outre, des particules de zéolite de type faujasite, de préférence de type X ou LSX, échangée à au moins 88% par des cations lithium et ayant un rapport Si/Al inférieur ou égal à 1.5, caractérisées en ce qu'elles sont susceptibles d'être obtenues par le procédé de fabrication susmentionné.

Avantageusement, lesdites particules sont utilisées en tant qu'adsorbant dans un procédé de séparation ou purification d'un flux gazeux, de préférence un procédé de séparation de type PSA, de préférence VSA, de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé.

De préférence, le flux gazeux à séparer comprend de l'azote et au moins un composé moins polaire et, de préférénce, le flux gazeux est de l'air et le composé moins polaire étant l'oxygène; l'air étant, dans le cadre de la présente invention, l'air contenu à l'intérieur d'un batiment ou d'une enceinte chauffée ou non, ou l'air extérieur, c'est-à-dire dans les conditions atmosphériques, pris tel quel ou éventuellement prétraité.

- le premier composé est l'azote et le deuxième composé est l'oxygène; et on produit un flux gazeux riche en oxygène, c'est-à-dire comprenant, en général, d'environ 90% à environ 95% d'oxygène.
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa,
- la température d'alimentation est comprise entre 10°C et 80°C, de préférence entre 25°C et 60°C.

L'invention concerne, en outre, un dispositif susceptible de mettre en oeuvre un procédé PSA, tel le procédé sus-décrit, comprenant au moins un adsorbeur et, préférentiellement, de 1 à 3 adsorbeurs. Il faut noter que la présente invention s'applique aussi à chacun des adsorbeurs d'un procédé mettant en oeuvre plusieurs adsorbants, par exemple un procédé multilits.

L'invention va maintenant être décrite plus en détail à l'aide d'exemples donnés à titre illustratif, mais non limitatif.

Exemple 1

Des particules (essais A à E) d'une même zéolite agglomérée de type X ont été soumises à plusieurs échanges d'ions avec des solutions-mères de chlorure de lithium de pureté variable (entre 0% et 99.995%) et en grand excès, par exemple au moins 100 stoechiométries dans cet exemple.

Après échange d'ions, les particules sont recueillies et leur composition est déterminée par la technique ICP-AES ( pour Induced Coupled Plasma-Atomic Emission Spectroscopy).

Les résultats obtenus sont donnés dans les tableaux I et II suivants.

Tableau I :

| Composition de la particule zéolitique (zéolite + liant) | | | | | | |
|---|---|---|---|---|---|---|
| Particules n° | Pureté de la solution-mère | Li (en % en equiv.) | Na (en % en equiv) | Mg (en % en equiv) | Ca (en % en equiv) | K (en % en equiv) |
| A | 0% | 0.00 | 77.98 | 14.27 | 6.13 | 1.63 |
| F | 30% | 11.02 | 70.91 | 13.40 | 4.45 | 0.22 |
| G | 59% | 27.93 | 53.81 | 13.02 | 4.91 | 0.33 |
| H | 77% | 42.26 | 38.75 | 13.32 | 5.32 | 0.35 |
| B | 90% | 60.12 | 20.26 | 13.61 | 5.37 | 0.64 |
| C | 95% | 67.23 | 13.00 | 13.90 | 5.28 | 0.58 |
| D | 99.9% | 80.37 | 1.57 | 13.05 | 4.51 | 0.50 |
| E | 99.995% | 81.69 | 0.02 | 13.53 | 4.44 | 0.32 |

Tableau II :

| Composition de la phase zéolitique | | | | | | |
|---|---|---|---|---|---|---|
| Zéolite n° | Pureté de la solution-mère | Li (en % en equiv) | Na (en % en equiv) | Mg (en % en equiv) | Ca (en % en equiv) | K (en % en equiv) |
| A | 0% | 0.00 | 96.02 | 0.28 | 2.28 | 1.42 |
| B | 90% | 70.70 | 23.91 | 0.81 | 4.15 | 0.43 |
| C | 95% | 79.40 | 15.74 | 0.67 | 3.88 | 0.32 |

Tableau II : (suite)

| Composition de la phase zéolitique | | | | | | |
|---|---|---|---|---|---|---|
| Zéolite n° | Pureté de la solution-mère | Li (en % en equiv) | Na (en % en equiv) | Mg (en % en equiv) | Ca (en % en equiv) | K (en % en equiv) |
| D | 99.9% | 91.29 | 3.72 | 0.17 | 4.41 | 0.41 |
| E | 99.995% | 96.33 | 0.00 | 0.57 | 3.07 | 0.03 |

Il apparaît clairement au vu des tableaux I et II que, même lorsqu'on utilise une solution extrêmement pure (essai E à 99.995%), il reste toujours environ 3% de cations calcium dans la phase zéolitique et quelques cations magnésium et/ou potassium.

Or, industriellement, il n'est possible d'utiliser que des solutions-mères de sels de lithium, tel le chlorure de lithium, ayant une pureté molaire comprise entre 95% et 99.9%.

De là, fabriquer à l'échelle industrielle des particules de zéolite X échangée à 99% ou 100% n'est pas toujours possible, contrairement à l'enseignement de l'art antérieur, c'est donc qu'il existe un taux d'échange limite fonction de la zéolite non-échangée utilisée, de la solution-mère mise en oeuvre et de la quantité de solution-mère consommée (ici 100 stoechiométries) et, plus généralement, des conditions d'échange, notamment la température, le nombre de colonnes d'échange.....

Exemple 2

Des particules de zéolite X agglomérée sont soumises à un procédé d'échange d'ions. Plus précisément, on fait percoler une solution-mère de chlorure de lithium de pureté égale à environ 99.6% (solution industrielle) à 1.7N au travers d'un lit desdites particules de zéolite X à une température de 100°C, en passant une quantité de solution égale à 4 fois la stoechiométrie.

Ensuite, les particules de zéolites sont récupérées et homogénéisées en composition. Après analyse des particules, il apparaît que le taux échange réel (TER) est de 95% environ.

Un échange poussé (100 stoechiométries) montre, par contre, que l'on peut atteindre un taux d'échange limite (TEL) de 97% (avec TEL = Li / (Li+Na) ), c'est-à-dire TER = TEL - 2% .

En fait, cette différence peut résulter de la pureté et/ou de la quantité de solution-mère utilisée.

Exemple 3

Des particules de zéolites ayant un taux échange variable (cf. tableau III suivant) sont utilisées comme adsorbant dans un procédé par adsorption de type VSA de séparation des gaz de l'air, pour produire de l'oxygène ayant une pureté d'environ 93%. Dans ces essais, les conditions de mise en oeuvre du procédé VSA sont les suivantes :

- 2 adsorbeurs fonctionnant en parallèle
- pression d'adsorption : $1.4.10^5$ Pa,
- pression de désorption : $0.4.10^5$ Pa,
- température de l'air d'alimentation : 35°C environ,
- cycles de production : 2 x 40 secondes.

Tableau III

| Essai n° | TER (en %) | Indice d'énergie | Indice d'investissement | Indice global de coût de l'$O_2$ |
|---|---|---|---|---|
| 1 | 90.5 | 100.0 | 100.0 | 100.0 |
| 2 | 94.0 | 98.4 | 97.5 | 98.0 |
| 3 | 95.0 | 98.1 | 97.0 | 97.6 |
| 4 | 95.9 | 97.8 | 101.0 | 99.1 |
| 5 | 97.0 | 97.6 | 112.0 | 109.0 |

Il apparaît, au vu du tableau III, que le taux d'échange limite TEL est de 97% (essai 5) et que les résultats les plus satisfaisants du point de vue des performances du procédé VSA sont obtenus pour un taux d'échange réel (TER) de 95% (essai 3) et non lorsque TER=TEL=97%.

En d'autres termes, pour une solution de chlorure de lithium donnée, il convient de définir des conditions d'échange suffisantes pour obtenir un TER inférieur de 2% au TEL.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

**Revendications**

1.  Procédé de fabrication de particules de zéolite de type X échangée par au moins des cations lithium et ayant un rapport Si/Al inférieur ou égal à 1.5, dans lequel :

    a) on fait percoler au moins une solution-mère contenant des sels de lithium ayant une pureté molaire supérieure à 95%, à travers au moins un lit de particules zéolitiques, ladite solution-mère permettant d'atteindre un taux d'échange limite (TEL) desdites particules de zéolite compris entre 90 et 100%,
    b) on arrête la percolation de ladite solution mère lorsqu'on a utilisé une quantité de solution-mère permettant d'obtenir un taux échange réel moyen (TER) tel que :

$$TER = TEL - 2\% \pm 1\%$$

    c) on récupère les particules de zéolite échangées au lithium obtenues à l'étape b).

2.  Procédé selon la revendication 1, caractérisé en ce que la solution-mère à une pureté de 98 % à 99.9%, de préférence de 99.3% à 99.9%.

3.  Procédé selon l'une des revendications 1 ou 2, caractérisé en ce que le TEL est compris entre 90% et 99%.

4.  Procédé selon l'une des revendications 1 à 3, caractérisé en ce que le TER est compris entre 88% et 98%.

5.  Procédé selon l'une des revendications 1 à 4, caractérisé en ce que l'échange d'ions est réalisé à une température entre 70° et 140°C, de préférence de l'ordre de 100°C.

6.  Procédé selon l'une des revendications 1 à 5, caractérisé en ce que ladite zéolite est une faujasite, de préférence une zéolite de type X.

7.  Procédé selon l'une des revendications 1 à 6, caractérisé en ce que la zéolite a un rapport Si/Al de l'ordre de 1.

8.  Particules de zéolite faujasite, de préférence une zéolite X, échangée à au moins 88 % par des cations lithium et ayant un rapport Si/Al inférieur ou égal à 1.5, caractérisées en ce qu'elles sont susceptibles d'être obtenues par un procédé de fabrication selon l'une des revendications 1 à 7.

9.  Utilisation de particules selon la revendication 8 en tant qu'adsorbant dans un procédé de séparation ou purification d'un flux gazeux, de préférence un procédé de séparation de type PSA, de préférence VSA.

10. Utilisation selon la revendication 9, caractérisée en ce que le flux gazeux à séparer comprend de l'azote et au moins un composé moins polaire et, de préférénce, le flux gazeux est de l'air et le composé moins polaire étant l'oxygène.

Office européen
des brevets

**RAPPORT DE RECHERCHE EUROPEENNE**

Numéro de la demande

EP 99 40 2050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 827 771 A (AIR LIQUIDE) 11 mars 1998 (1998-03-11) * page 3, ligne 41 - page 4, ligne 4 * --- | 1,8 | C01B39/22 |
| A,D | US 5 174 979 A (CHAO CHIEN C  ET AL) 29 décembre 1992 (1992-12-29) * revendications 1,9 * --- | 1,8 | |
| A | EP 0 855 209 A (CECA SA) 29 juillet 1998 (1998-07-29) * exemple 2 * --- | 1,8 | |
| A,D | US 5 268 023 A (KIRNER JOHN F.) 7 décembre 1993 (1993-12-07) * colonne 5, ligne 23 - ligne 38; revendication 3 * ----- | 1,8 | |

**DOMAINES TECHNIQUES RECHERCHES (Int.Cl.7)**

C01B
B01J

Le présent rapport a été établi pour toutes les revendications

| Lieu de la recherche | Date d'achèvement de la recherche | Examinateur |
|---|---|---|
| BERLIN | 16 décembre 1999 | Clement, J-P |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2050

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-12-1999

| Document brevet cité au rapport de recherche | | Date de publication | Membre(s) de la famille de brevet(s) | | Date de publication |
|---|---|---|---|---|---|
| EP 0827771 | A | 11-03-1998 | FR | 2753108 A | 13-03-1998 |
| | | | BR | 9704654 A | 09-02-1999 |
| | | | CN | 1182634 A | 27-05-1998 |
| | | | JP | 10194709 A | 28-07-1998 |
| | | | US | 5922107 A | 13-07-1999 |
| US 5174979 | A | 29-12-1992 | US | 5413625 A | 09-05-1995 |
| EP 0855209 | A | 29-07-1998 | FR | 2758739 A | 31-07-1998 |
| | | | CA | 2224945 A | 24-07-1998 |
| | | | JP | 10212103 A | 11-08-1998 |
| US 5268023 | A | 07-12-1993 | AUCUN | | |

EPO FORM P0460

Pour tout renseignement concernant cette annexe : voir Journal Officiel de l'Office européen des brevets, No.12/82